# EUROPEAN PATENT SPECIFICATION

(11) **EP 3 438 443 B1**
(45) Date of publication and mention of the grant of the patent: **06.10.2021**
(21) Application number: 17775741.6
(22) Date of filing: 24.03.2017
(51) Int. Cl.: F02M 35/12

(54) **NOISE REDUCTION DEVICE FOR VEHICLE**
RAUSCHVERRINGERUNGSVORRICHTUNG FÜR FAHRZEUG
DISPOSITIF DE DIMINUTION DE BRUIT POUR VÉHICULE

(30) Priority: 28.03.2016 KR 20160036987; 20.06.2016 KR 20160076335
(43) Date of publication of application: 06.02.2019
(73) Proprietor: CooperStandard Automotive and Industrial Inc., Gyeongsangbuk-do 39395 (KR)
(72) Inventor: HWANG, Ho Jun, Anyang-si Gyeonggi-do 14119 (KR); CHO, Kwang Ik, Anyang-si Gyeonggi-do 14119 (KR); LEE, Jung Uk, Anyang-si Gyeonggi-do 14119 (KR)
(74) Representative: Botti, Mario
(86) International application number: PCT/KR2017/003217
(87) International publication number: WO 2017/171316

(56) References cited:
- EP-A1- 2 067 979
- EP-A1- 2 067 979
- DE-A1-102010 020 064
- DE-U1-202013 103 960
- KR-A- 20140 003 256
- KR-A- 20140 107 886
- KR-A- 20150 095 437
- KR-B1- 101 172 191

## Description

### [Technical Field]

This disclosure relates to noise reduction device for reducing noise of moving air, and more particularly, to a noise reduction device for a vehicle, in which a plurality of resonance chambers are formed to efficiently tune air of various frequencies.

### [Background Art]

Generally, an intake system of a vehicle includes an air cleaner, a turbo charger, an intercooler, an air duct and an engine manifolder, and the air introduced into the internal combustion engine by the intake system repeatedly expands and shrinks to generate pulsation of the intake air. The pulsation of the intake air causes noise due to the change of air pressure, and in particular, becomes a factor of causing louder noise due to the resonance phenomenon of the air at a vehicle body or in an indoor space of the vehicle.

In order to suppress the intake noise, a duct-type resonator for attenuating or reducing the intake noise of a specific frequency is disposed at an intake hose installed at the rear end of the turbo charger.

In the duct-type resonator according to the conventional art, the number of resonance chambers and the area thereof are limited within a certain range due to a practical restriction in the assembling process, and thus the frequency tuning of the air may not be performed over a wide band.

In order to solve this problem, Korean Unexamined Patent Publication No. 2015-0095435 discloses a resonator for a vehicle, in which a barrier extending outwards from an outer surface of an inner pipe in a vertical direction is formed so that the resonance chamber is partitioned into a plurality of chambers by the barrier. Other noise reduction devices are known from DE102010020064A1, DE202013103960U1 and EP2067979A1.

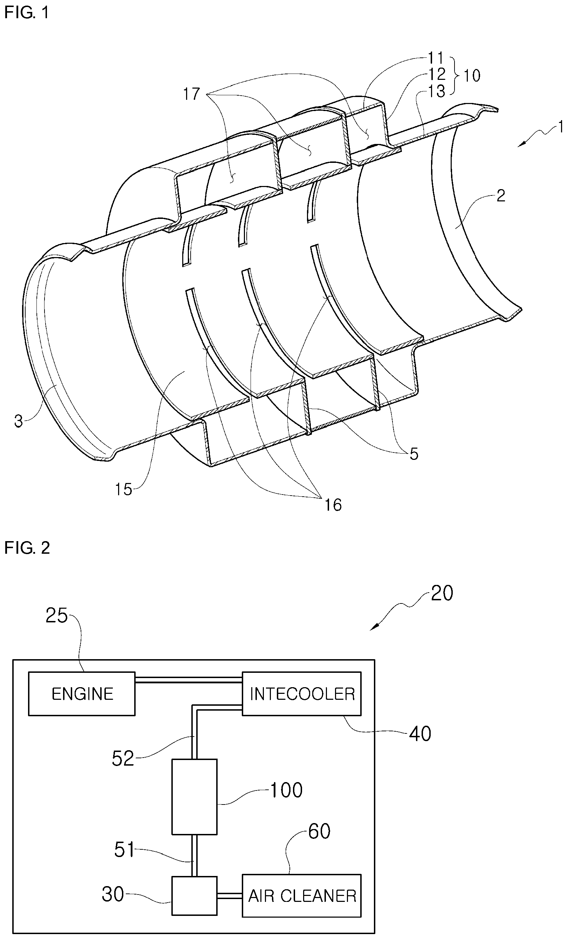

Specifically, as shown in FIG. 1, the resonator 1 includes an outer pipe 10 forming an external appearance, an inner pipe 15 inserted into the outer pipe, a resonance chamber 17 formed between the outer pipe 10 and the inner pipe 15, and a barrier 5 partitioning the resonance chamber 17 into a plurality of chambers. The plurality of resonance chambers 17 communicate with a plurality of slits 16 formed in the inner pipe 15, respectively. In other words, the slit 16 acts as a passage to guide the air moving from an inlet 2 to an outlet 3 to move to the resonance chamber 17.

In the conventional resonator 1, the outer pipe 10 includes a reduced outer pipe 13 extending parallel to a moving direction of air, a bent outer pipe 12 having one side coupled to the reduced outer pipe 13 and extending in an outer direction of the inner pipe 15, and an expanded outer pipe 11 having one side coupled to the bent outer pipe 12 and extending in the same direction as the reduced outer pipe 13. That is, the outer pipe 10 should have a bent portion for forming the resonance chamber 17, like the bent outer pipe 12. However, since the area of the resonance chamber 17 is limited to a certain range due to various design conditions such as the positional relationship between the pipes and the relationship with surrounding structures, there is a problem that the performance of reducing noise not belonging to a specific frequency is remarkably deteriorated.

Consequently, in order to efficiently perform the frequency tuning work in various bands, a resonance chamber of a relatively large size is required, and the size of the resonator itself should be increased in order to satisfy the demand. However, in the conventional art, it is impossible to manufacture the resonator over a certain size due to the restrictions of various design conditions, and thus the size of the resonance chamber is insufficient to perform the frequency tuning work more efficiently.

### [Disclosure]

### [Technical Problem]

The present disclosure is designed to solve the limitations and problems of the conventional art as described above, and the present disclosure is directed to providing a noise reduction device for a vehicle, which may reduce noise of various frequencies since it is possible to secure a wide area of a resonance chamber to improve the space utilization efficiency without increasing the size of the resonator.

### [Technical Solution]

In one general aspect, there is provided a noise reduction device for a vehicle, comprising: an outer pipe forming an external appearance; a turbo charger connection pipe into which a turbo charger for supercharging air is inserted therein, the turbo charger connection pipe being coupled to the outer pipe in a state where an outer surface thereof is in contact with an inner surface of the outer pipe, the turbo charger connection pipe extending into the outer pipe; an inner pipe located inside the outer pipe and integrally fabricated with the turbo charger connection pipe; and a baffle configured to partition a resonance chamber formed between the outer pipe and the inner pipe into a plurality of chambers. An object of the present invention is a noise reduction device for a vehicle according to claim 1.

### [Advantageous Effects]

According to the present disclosure proposed herein, a turbo charger connection pipe is directly inserted into the outer pipe forming an external appearance of the noise reduction device to form a resonance chamber for reducing the noise of intake air, and thus it is possible to ensure the area of the resonance chamber to the maximum.

Also, since it is possible to secure a resonance chamber of a large area without artificially enlarging the size of the resonator, the space utilization efficiency may be greatly improved and the noise of various frequencies may be reduced.

In addition, since the baffle may be easily coupled to the inner surface of the outer pipe by welding, pressing, fitting or bracing to partition the resonance chamber, it is possible to simplify the assembling process of the noise reduction device, and thus the noise reduction device may be efficiently assembled.

### [Description of Drawings]

FIG. 1 is a cross-sectioned view showing an internal structure of a resonator according to the conventional art.
FIG. 2 is a diagram schematically showing an intake system of a vehicle.
FIG. 3 is a perspective view showing a structure of a noise reduction device, in which a turbo charger and a resonator according to an embodiment of the present disclosure are exploded.
FIG. 4 is a cross-sectioned view, taken along the line I-I' of FIG. 3, showing an internal structure of the noise reduction device in a state where the turbo charger and the resonator are exploded.
FIG. 5 is an enlarged view showing the portion X of FIG. 4.
FIG. 6 is a diagram showing the flow of air moving along the noise reduction device in a state where the turbo charger and the resonator are coupled.

### [Best Mode]

Hereinafter embodiments of the present disclosure will be described in detail with reference to the accompanying drawings.

FIG. 2 is a diagram schematically showing an intake system of a vehicle.

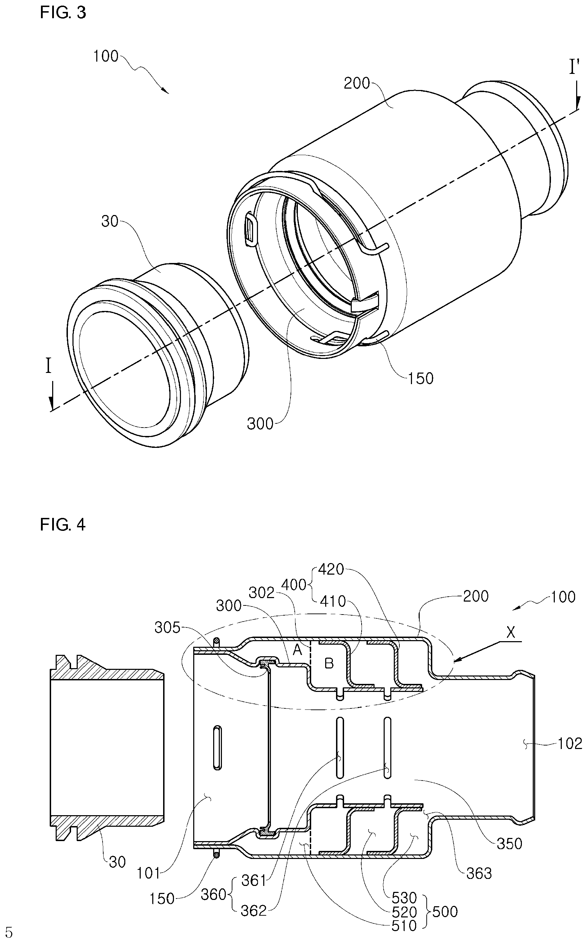

Referring to FIG. 2, an intake system 20 for a vehicle includes a turbo charger 30 installed for supercharging the intake air supplied to an engine. The turbo charger 30 generates a wideband intake noise encompassing a low frequency and a high frequency at the time of driving, so that the driving noise generated at the turbo charger 30 lowers the riding comfort of a driver, thereby deteriorating the overall merchantability of the vehicle. Thus, a noise reduction device 100 for a vehicle (see FIG. 3) is installed to a rear end of the turbo charger 30 in order to reduce the operating noise.

In addition, the intake system 20 includes an engine 25 for supplying power, an air cleaner 60 for filtering foreign substances in the intake air supplied from the engine 25, and an intercooler 40 for cooling the intake air supercharged by the turbo charger 30 to the engine 25.

The noise reduction device 100 is installed between connection members such as hoses, steel pipes or cast articles 51, 52 connected to the intercooler 40 to reduce the operating noise of the turbo charger 30, thereby improving the noise generated at the air intake process.

Hereinafter, the noise reduction device 100 will be described in detail.

FIG. 3 is a perspective view showing a structure of a noise reduction device, in which a turbo charger and a resonator according to an embodiment of the present disclosure are exploded, and FIG. 4 is a cross-sectioned view, taken along the line l-l' of FIG. 3, showing an internal structure of the noise reduction device in a state where the turbo charger and the resonator are exploded.

Referring to FIGS. 3 and 4, the noise reduction device 100 according to an embodiment of the present disclosure includes an outer pipe 200 forming an external appearance, a turbo charger connection pipe 300 partially inserted into an inner front end portion of the outer pipe 200, and an inner pipe 350 partially inserted into an inner rear end portion of the outer pipe 200. The turbo charger connection pipe 300 is a pipe into an inner side of which the turbo charger 30 is inserted and fixed, and the inner pipe 350 is a pipe inserted into the outer pipe 200 to provide a space for air to move. In this specification, the turbo charger connection pipe 300 and the inner pipe 350 are separately described in consideration of the above different functions, but the turbo charger connection pipe 300 and the inner pipe 350 are integrally fabricated.

Also, the turbo charger connection pipe 300 may be a part of the turbo charger 30 for supercharging air. That is, a distal end of the turbo charger 30 may extend to an inner side of the outer pipe 200. As another example, the turbo charger connection pipe 300 may be a separate component coupled to an end of the turbo charger 30.

In addition, the turbo charger connection pipe 300 and the outer pipe 200 may be connected to each other by a connector 150. For example, predetermined holes may be formed in the turbo charger connection pipe 300 and the outer pipe 200, at corresponding positions, and the connector 150 may pass through the holes in a twisted manner so that the turbo charger connection pipe 300 and the outer pipe 200 are coupled.

A sealant 305 with a predetermined elastic force is installed inside the turbo charger connection pipe 300. Specifically, when the turbo charger connection pipe 300 and the turbo charger 30 are coupled, the sealant 305 may be installed between the turbo charger connection pipe 300 and the turbocharger 30. For example, if the air flows back into a space between the turbocharger connection pipe 300 and the turbo charger 30, unexpected noise may be generated at the noise reduction device 100. Also, the amount of air moving to the resonance chamber 500 is reduced, and thus the resonance chamber 500 may not easily exhibit proper noise reduction performance. However, in the present disclosure, the sealant 305 may prevent the air moving from an inlet 101 to an outlet 102 from flowing back into the fine space between the turbo charger connection pipe 300 and the turbocharger 30.

The inner pipe 350, which is integrally fabricated with the turbo charger connection pipe 300, may be coupled to the intercooler 40 that extends long to the rear to cool the intake air. As another example, the intercooler 40 may also be disposed to surround the end of the outer pipe 200 and be coupled to the outer pipe 200.

A resonance chamber 500 for reducing intake noise is installed in the space between the outer pipe 200 and the turbo charger connection pipe 300 and the space between the outer pipe 200 and the inner pipe 350. Conventionally, a resonance chamber for reducing air movement noise is formed by coupling the inner pipe to a bent portion of the outer pipe of the noise reduction device. Also, the coupled structure of the outer pipe and the inner pipe is combined with the turbo charger connection pipe or the turbo charger for supercharging air. In the conventional resonator structure, for increasing the size of the resonance chamber in order to perform the tuning work of various frequency bands, the size of the resonator should be increased together.

However, in the present disclosure, the turbo charger connection pipe 300 is directly inserted into the outer pipe 200 of the noise reduction device, and thus the size of the resonance chamber may be further increased than that of the conventional art, even if the size of the resonator is not increased. Specifically, the resonance chamber 500 includes a first resonance chamber 510, a second resonance chamber 520 and a third resonance chamber 530 based on the moving direction of air moving from the inlet 101 to the outlet 102.

In addition, as shown in FIG. 4 in detail, the first resonance chamber 510 adjacent to the air inlet 101 includes an extended space A formed between the turbo charger connection pipe 300 and the outer pipe 200 and a basic space B formed between the inner pipe 350 and the outer pipe 200. For convenience of explanation, in FIG. 4, the extended space A and the basic space B are depicted to be distinguished based on an extension line 302, which is a virtual line, but the extended space A and the basic space B are actually a single communication space forming the first resonance chamber 510. Conventionally, as the inner pipe is coupled to the bent portion of the outer pipe, the area of the first resonance chamber adjacent to the inlet 101 is limited to the basic space. However, according to the present disclosure, since the turbo charger connection pipe 300 is directly inserted into the outer pipe 200, the first resonance chamber 510 is enlarged to the extended space A in addition to the basic space B, and thus noise of more diverse frequencies may be efficiently reduced.

That is, in the present disclosure, since the first resonance chamber 510 is formed not only by the inner pipe 350 but also by the turbocharger connection pipe 300 extending from the turbo charger 30, the area of the first resonance chamber 510 may be secured as wide as possible without increasing the size of the noise reduction device 100.

Also, at least one baffle 400 is provided in the resonance chamber 500 to partition the space thereof. Specifically, the baffle 400 includes a first baffle 410 installed at a front side and a second baffle 420 installed at a rear side based on the air moving path.

The first baffle 410 includes a first pipe expansion portion 411 having an outer surface coupled to the inner surface of the outer pipe 200 by welding or the like and extending in a lateral direction, a first bending portion 442 having one side coupled to the first pipe expansion portion 411 and extending in a vertical direction, and a first pipe shrinkage portion 413 having one side coupled to the first bending portion 412 and extending in a direction parallel to the first pipe expansion portion 411. That is, the first bending portion 412 is to partition the resonance chamber. Also, the first pipe shrinkage portion 413 may be coupled to the inner pipe 350 by welding or the like.

Similarly, the second baffle 420 includes a second pipe expansion portion 421 having outer surface coupled to the inner surface of the outer pipe 200 by welding or the like and extending in a lateral direction, a second bending portion 422 having one side coupled to the second pipe expansion portion 421 and extending in a vertical direction, and a second pipe shrinkage portion 423 having one side coupled to the second bending portion 422 and extending in a direction parallel to the second pipe expansion portion 421. That is, the second bending portion 422 is to partition the resonance chamber. Also, the second pipe shrinkage portion 423 may be coupled to the inner pipe 350 by welding or the like.

Accordingly, the first resonance chamber 510 and the second resonance chamber 520 may be partitioned by the first baffle 410, and the second resonance chamber 520 and the third resonance chamber 530 may be partitioned by the second baffle 420. In addition, since one surface of the first resonance chamber 510 is partitioned by the turbo charger connection pipe 300, which forms a part of the turbo charger 30, the first resonance chamber 510 may secure a larger space than the conventional one.

The first resonance chamber 510 may communicate with a first slit 361 that is formed at the inner pipe 350. Likewise, the second resonance chamber 520 may communicate with a second slit 362 that is formed at the inner pipe 350 and located at the rear of the first slit 361. In addition, the third resonance chamber 530 may communicate with a gap 363 formed between the outer pipe 200 and the end of the inner pipe 350.

The first slit 361 and the second slit 362 may be formed to have different widths. For example, the first slit 361 may be formed to have a relatively large width compared to the second slit 362. The difference in the slit width determines the frequency of air noise to be reduced. In addition, the air entering the resonance chamber may have different frequencies depending on various factors such as the width of the slit, the volume of each resonance chamber, the location of the baffle or the like. In the present disclosure, since the first slit 361 and the second slit 362 are formed to have different widths, the air with different frequencies may be tuned in the resonance chambers, and thus it is possible to attenuate the broadband frequency noise. In addition, by configuring the gap 363 between the outer pipe 200 and the inner pipe 350 to be different from the widths of the first slit 361 and the second slit 362, it is also possible to attenuate more broadband frequency noise.

The flow of air moving inside the noise reduction device 100 assembled according to the above process will be described.

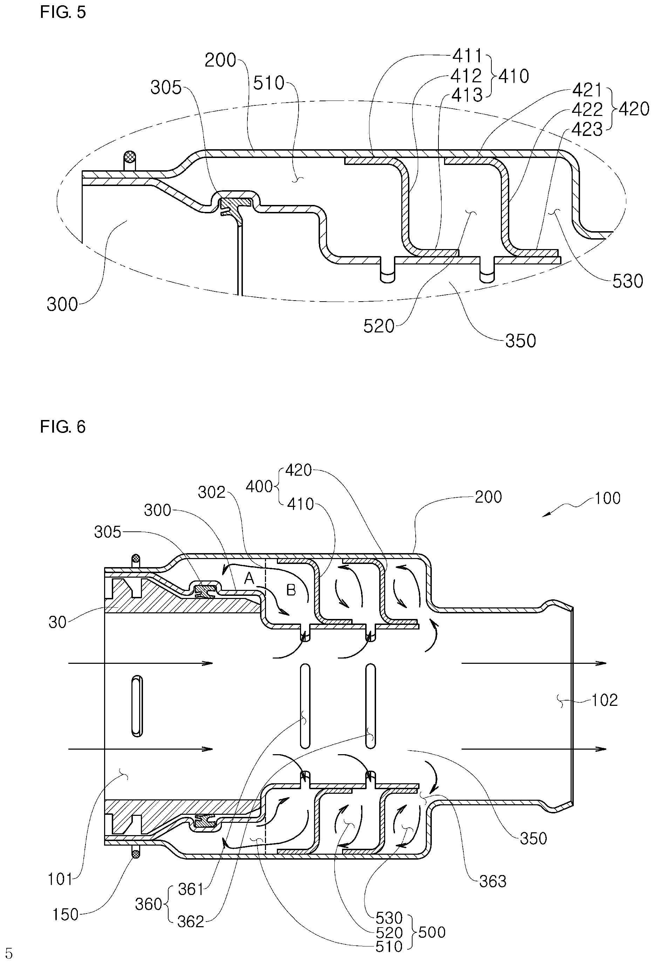

FIG. 6 is a diagram showing the flow of air moving along the noise reduction device in a state where the turbo charger and the resonator are coupled.

Referring to FIG. 6, the turbo charger 30 is coupled in the turbo charger connection pipe 300 in an assembling manner, and the sealant 305 seals the space between the turbo charger connection pipe 300 and the turbo charger 30.

A part of the air entering the turbo charger connection pipe 300 through the inlet 101 passes through the first slit 361 and moves to the first resonance chamber 510. For example, the first resonance chamber 510 may be a resonance chamber that reduces noise by tuning air having a high frequency. The first resonance chamber 510 includes the extended space A formed between the turbo charger connection pipe 300 and the outer pipe 200 and the basic space B formed between the inner pipe 350 and the outer pipe 200. That is, even though the first resonance chamber has only the basic space in the conventional art, in the present disclosure, the extended space is added further to the basic space, and thus it is possible to increase the area of the resonance chamber and thus greatly improve the space utilization efficiency.

Another part of the air entering the turbo charger connection pipe 300 passes through the second slit 362 and moves to the second resonance chamber 520. The second resonance chamber 520 may be a resonance chamber that reduces noise by tuning air having a lower frequency, compared to the first resonance chamber 510. Another part of the air entering the turbo charger connection pipe 300 passes through the gap 363 and moves to the third resonance chamber 530. The third resonance chamber 530 may be a resonance chamber that reduces noise by tuning air with a lower frequency, compared to the second resonance chamber 520.

Accordingly, the air introduced into the turbo charger connection pipe 300 is moved to the first to third resonance chambers 510, 520, 530 according to the respective frequencies. Since the first to third resonance chambers 510, 520, 530 turn the air according to the frequencies, the intake air is discharged to the outside through the outlet 102 of the inner pipe 350 with the noise reduced.

Even though it has been described in the former embodiment that the frequency of the air introduced into the noise reduction device 100 is gradually decreased from the first resonance chamber 510 to the third resonance chamber 530, modifications are possible. For example, the second resonance chamber 520 and the third resonance chamber 530 may be resonance chambers for tuning relatively high frequency air, and the first resonance chamber 510 may be a resonance chamber for tuning relatively low frequency air.

As understood from the above description and the accompanying drawings, the noise reduction device 100 according to the present disclosure may reduce the noise of the air flowing into the resonance chambers more flexibly according to the conditions such as the change of surrounding environments or the operating state of the vehicle.

While the exemplary embodiments have been shown and described, it will be understood by those skilled in the art that various changes in form and details may be made thereto without departing from the scope of the present disclosure as defined by the appended claims. Therefore, it is intended that the present disclosure not be limited to the particular exemplary embodiments disclosed as the best mode contemplated for carrying out the present disclosure, but that the present disclosure will include all embodiments falling within the scope of the appended claims.

## Claims

1. A noise reduction device (100) for a vehicle, comprising:
an outer pipe (200) forming an external appearance;
a turbo charger connection pipe (300) into which a turbo charger (30) for supercharging air is inserted therein, the turbo charger connection pipe (300) being coupled to the outer pipe (200) in a state where an outer surface thereof is in contact with an inner surface of the outer pipe (200), the turbo charger connection pipe (300) extending into the outer pipe (200);
an inner pipe (350) located inside the outer pipe (200) and integrally fabricated with the turbo charger connection pipe (300); and
a baffle (400) configured to partition a resonance chamber formed between the outer pipe (200) and the inner pipe (350) into a plurality of chambers,
wherein among the resonance chambers partitioned by the baffle (400), a resonance chamber adjacent to an air inlet (101) has an extended space formed between the turbo charger connection pipe (300) and the outer pipe (200) and a basic space formed between the inner pipe (350) and the outer pipe (200), **characterized in that**,
the baffle includes a first baffle (410) and a second baffle (420) installed along a direction from the air inlet (101) toward an outlet (102), and
wherein the resonance chamber includes:
a first resonance chamber (510) having the extended space and the basic space and communicating with a first slit (361) formed at one side of the inner pipe (350);
a second resonance chamber (520) communicating with a second slit (362) formed at the other side of the inner pipe (350) and having a space partitioned from the first resonance chamber (510) by the first baffle (410); and
a third resonance chamber (530) communicating with a gap (363), which is formed between an end of the inner pipe (350) and the outer pipe (200) and serves as an air passage, and having a space partitioned from the second resonance chamber (520) by the second baffle (420).

2. The noise reduction device (100) for a vehicle according to claim 1, wherein the baffle (400) includes:
a pipe expansion portion coupled to the inner surface of the outer pipe (200) by welding;
a bending portion extending from the outer pipe (200) toward the inner pipe (350) to partition the resonance chamber; and
a pipe shrinkage portion coupled to the outer surface of the inner pipe (350) by welding.

3. The noise reduction device (100) for a vehicle according to claim 1,
wherein the outer pipe (200) and the turbo charger connection pipe (300) are coupled to each other by a connector with a predetermined elastic force.

4. The noise reduction device (100) for a vehicle according to claim 1,
wherein a sealant (305) is formed at an inner surface of the turbo charger connection pipe (300) to prevent air from flowing back into a space between the turbo charger (30) and the turbo charger connection pipe (300) when the turbo charger (30) is inserted into the turbo charger connection pipe (300).

## Patentansprüche

1. Geräuschreduzierungsvorrichtung (100) für ein Fahrzeug umfassend:
ein Außenrohr (200), das eine äußere Erscheinung bildet;
ein Turboladerverbindungsrohr (300), in das ein Turbolader (30) zum Aufladen von Luft darin eingeführt ist, wobei das Turboladerverbindungsrohr (300) mit dem Außenrohr (200) in einem Zustand gekoppelt ist, in dem eine Außenoberfläche davon mit einer Innenoberfläche des Außenrohrs (200) in Kontakt ist, wobei das Turboladerverbindungsrohr (300) sich in das Außenrohr (200) erstreckt;
ein Innenrohr (350), das innerhalb des Außenrohrs (200) angeordnet ist und mit dem Turboladerverbindungsrohr (300) integral gefertigt ist; und
eine Prallfläche (400), die dazu konfiguriert ist, eine Resonanzkammer, die zwischen dem Außenrohr (200) und dem Innenrohr (350) ausgebildet ist, in eine Vielzahl von Kammern zu unterteilen,
wobei unter den durch die Prallfläche (400) unterteilten Kammern eine Resonanzkammer angrenzend an einen Lufteinlass (101) einen erweiterten Raum, der zwischen dem Turboladerverbindungsrohr (300) und dem Außenrohr (200) ausgebildet ist, und einen Basisraum aufweist, der zwischen dem Innenrohr (350) und dem Außenrohr (200) ausgebildet ist,
**dadurch gekennzeichnet, dass**
die Prallfläche eine erste Prallfläche (410) und eine zweite Prallfläche (420) umfasst, die längs einer Richtung von dem Lufteinlass (101) zu einem Auslass (102) installiert sind, und
wobei die Resonanzkammer umfasst:
eine erste Resonanzkammer (510), die den erweiterten Raum und den Basisraum aufweist und mit einem ersten Schlitz (361), der an einer Seite des Innenrohrs (350) ausgebildet ist, kommuniziert;
eine zweite Resonanzkammer (520), die mit einem zweiten Schlitz (362) kommuniziert, der an der anderen Seite des Innenrohrs (350) ausgebildet ist und einen Raum aufweist, der von der ersten Resonanzkammer (510) durch die erste Prallfläche (410) abgeteilt ist; und
eine dritte Resonanzkammer (530), die mit einem Spalt (363) kommuniziert, der zwischen einem Ende des Innenrohrs (350) und dem Außenrohr (200) ausgebildet ist und als Luftdurchlass dient, und die einen Raum aufweist, der von der zweiten Resonanzkammer (520) durch die zweite Prallfläche (420) abgetrennt ist.

2. Geräuschreduzierungsvorrichtung (100) für ein Fahrzeug nach Anspruch 1, wobei die Prallfläche (400) umfasst:
einen Rohrexpansionsabschnitt, der mit der Innenoberfläche des Außenrohrs (200) durch Schweißen gekoppelt ist;
einen Biegeabschnitt, der sich von dem Außenrohr (200) zu dem Innenrohr (350) erstreckt, um die Resonanzkammer zu unterteilen; und
einen Rohrschrumpfungsabschnitt, der mit der Außenoberfläche des Innenrohrs (350) durch Schweißen gekoppelt ist.

3. Geräuschreduzierungsvorrichtung (100) für ein Fahrzeug nach Anspruch 1,
wobei das Außenrohr (200) und das Turboladerverbindungsrohr (300) miteinander durch einen Verbinder mit einer vorbestimmten elastischen Kraft gekoppelt sind.

4. Geräuschreduzierungsvorrichtung (100) für ein Fahrzeug nach Anspruch 1,
wobei eine Versiegelung (305) an einer Innenoberfläche des Turboladerverbindungsrohrs (300) ausgebildet ist, um zu verhindern, dass Luft in einen Raum zwischen dem Turbolader (30) und dem Turboladerverbindungsrohr (300) zurückströmt, wenn der Turbolader (30) in das Turboladerverbindungsrohr (300) eingeführt ist.

## Revendications

1. Dispositif de réduction du bruit (100) pour un véhicule, comprenant :
un tuyau extérieur (200) formant un aspect extérieur ;
un tuyau de connexion de turbocompresseur (300) dans lequel est inséré un turbocompresseur (30) pour de l'air de suralimentation, le tuyau de connexion de turbocompresseur (300) étant couplé au tuyau extérieur (200) dans un état où une surface extérieure de celui-ci est en contact avec une surface intérieure du tuyau extérieur (200), le tuyau de connexion de turbocompresseur (300) s'étendant dans le tuyau extérieur (200) ;
un tuyau intérieur (350) situé à l'intérieur du tuyau extérieur (200) et fabriqué d'un seul tenant avec le tuyau de connexion de turbocompresseur (300) ; et
un déflecteur (400) configuré pour diviser une chambre de résonance formée entre le tuyau extérieur (200) et le tuyau intérieur (350) en une pluralité de chambres,
où parmi les chambres de résonnance séparées par le déflecteur (400), une chambre de résonance adjacente à une entrée d'air (101) a un espace étendu formé entre le tuyau de connexion de turbocompresseur (300) et le tuyau extérieur (200) et un espace de base formé entre le tuyau intérieur (350) et le tuyau extérieur (200),
**caractérisé en ce que**
le déflecteur comprend un premier déflecteur (410) et un second déflecteur (420) installés le long d'une direction allant de l'entrée d'air (101) vers une sortie (102), et
la chambre de résonance comprend :
une première chambre de résonance (510) ayant l'espace étendu et l'espace de base et communiquant avec une première fente (361) formée sur un côté du tuyau intérieur (350);
une deuxième chambre de résonance (520) communiquant avec une deuxième fente (362) formée de l'autre côté du tuyau intérieur (350) et ayant un espace séparé de la première chambre de résonance (510) par le premier déflecteur (410) ; et
une troisième chambre de résonance (530) communiquant avec un interstice (363) qui est formé entre une extrémité du tuyau intérieur (350) et le tuyau extérieur (200) et qui sert de passage d'air, et ayant un espace séparé de la deuxième chambre de résonance (520) par le deuxième déflecteur (420)

2. Dispositif de réduction de bruit (100) pour un véhicule selon la revendication 1, dans lequel le déflecteur (400) comprend :
une partie d'expansion de tuyau couplée par soudage à la surface intérieure du tuyau extérieur (200) ;
une partie courbée s'étendant depuis le tuyau extérieur (200) en direction du tuyau intérieur (350) pour diviser la chambre de résonance ; et
une partie de retrait de tuyau couplée par soudage à la surface extérieure du tuyau intérieur (350).

3. Dispositif de réduction du bruit (100) pour un véhicule selon la revendication 1, dans lequel le tuyau extérieur (200) et le tuyau de connexion de turbocompresseur (300) sont couplés l'un à l'autre par un connecteur avec une force élastique prédéterminée.

4. Dispositif de réduction de bruit (100) pour un véhicule selon la revendication 1, dans lequel un produit d'étanchéité (305) est formé au niveau d'une surface intérieure du tuyau de connexion de turbocompresseur (300) pour empêcher l'air de refluer dans un espace entre le turbocompresseur (30) et le tuyau de connexion de turbocompresseur (300) lorsque le turbocompresseur (30) est inséré dans le tuyau de connexion de turbocompresseur (300).
